## Europäisches Patentamt

(19) **European Patent Office**

**Office européen des brevets**

(11) Numéro de publication: **0 159 924**
**B1**

(12) # FASCICULE DE BREVET EUROPEEN

(45) Date de publication du fascicule du brevet:
11.05.88

(51) Int. Cl.⁴: **H 04 N 7/00,** H 04 L 25/38

(21) Numéro de dépôt: **85400422.3**

(22) Date de dépôt: **05.03.85**

(54) **Démodulateur DIDON numérique.**

(30) Priorité: **09.03.84 FR 8403636**

(43) Date de publication de la demande:
**30.10.85 Bulletin 85/44**

(45) Mention de la délivrance du brevet:
**11.05.88 Bulletin 88/19**

(84) Etats contractants désignés:
**DE GB IT**

(56) Documents cités:
**FR - A - 2 496 376**
**US - A - 4 199 656**
**US - A - 4 242 755**
**US - A - 4 302 845**
**US - A - 4 358 846**

**FUNKSCHAU, vol. 49, no. 19, septembre 1977, pages 62-67, Munich, DE; D. EATON et al.: "Die Grundlagen von Teletext und Viewdata"**
**PROCEEDINGS OF THE IEE, vol. 126, no. 12, décembre 1979, pages 1374-1396, Stevenage, Herts., GB; D.J. BEAKHUST et al.: "Teletext and viewdata - a comprehensive component solution"**

(73) Titulaire: **THOMSON-CSF, 173, Boulevard Haussmann, F-75379 Paris Cédex 08 (FR)**

(72) Inventeur: **Vernhet, Jean, THOMSON-CSF SCPI 173, bld Haussmann, F-75379 Paris-Cedex 08 (FR)**
Inventeur: **de Couasnon, Tristan, THOMSON-CSF SCPI 173, bld Haussmann, F-75379 Paris-Cedex 08 (FR)**

(74) Mandataire: **Courtellemont, Alain et al, THOMSON-CSF SCPI 19, avenue de Messine, F-75008 Paris (FR)**

## Description

La présente invention se rapporte à la réception de données DIDON et, en particulier, à un décodeur DIDON qui comporte un démodulateur suivi d'un démultiplexeur; le démodulateur reçoit, par exemple de la prise de péritélévision d'un récepteur de télévision standard, le signal vidéo de télévision et a pour fonction de fournir sur ses sorties: le train binaire de données, l'horloge binaire en phase avec les éléments du train binaire, un signal de validation et un signal de synchronisation ligne; le démultiplexeur qui suit le démodulateur a pour tâche de découper les informations du train binaire en octets en recherchant la configuration particulière de l'octet de «synchro octet», de reconnaître l'identificateur de la source de l'information pour laquelle il est programmé et de délivrer sur ses sorties les octets de données provenant de cette source à l'exclusion des données provenant d'autres sources dont les informations, comme celles de la source considérée, sont transmises, par multiplexage temporel, dans le signal de télévision.

L'invention se rapporte plus spécialement à une structure particulière du démodulateur DIDON numérique.

Quelques remarques et rappels préliminaires concernant le DIDON faciliteront la suite de la description.

La transmission d'informations numériques par diffusion hertzinne, éventuellement avec multiplexage temporel entre plusieurs sources, selon la procédure DIDON, sera considérée dans le cas où le support de transmission est le signal de télévision. Dans la procédure DIDON l'information numérique est découpée en paquets; un paquet est émis par ligne de balayage horizontal; un paquet provient tout entier d'une seule source. Dans un paquet l'information est regroupée en octets; le paquet et caractérisé par son en-tête qui comporte, dans l'ordre: 2 octets caractéristiques de la fréquence binaire (salve de synchronisation), 1 octet d'initialisation de la découpe en octets (octet de synchro octet), 3 octets d'identification du paquet et 2 octets de validation du paquet (1 octet d'indice de continuité et un octet de format des données utiles); les octets de données utiles suivent l'en-tête du paquet.

Les démodulateurs utilisés dans la procédure DIDON on connaissance de la nature binaire du signal qu'ils recherchent et disposent de l'information spectrale de la salve de synchronisation. Ils ont pour tâche, à partir de ces paramètres, de reconnaître les lignes transportant les données, de restituer les niveaux binaires et de régénérer l'horloge en phase avec les données.

Le spectre du signal de données, de nature dite NRZ (Non Retour à Zéro), est continu, a un premier zéro à la fréquence binaire et transporte 80% de l'énergie du signal entre le continu et la demi-fréquence binaire. La détection de la demi-fréquence binaire est donc caractéristique de la présence d'une ligne de données. Cette recherche de la structure binaire est facilitée, en début de paquet, par la structure des deux premiers octets de l'en-tête constituée de 16 «uns» et «zéros» alternés. Il va de soi que le signal du programme télévisé peut, dans certaines parties de l'image, transporter une raie à ½ fréquence binaire. La reconnaissance du paquet de données est donc nécessairement entâchée d'une certaine probabilité d'erreurs que l'on minimise en général en n'autorisant la recherche que pendant l'ouverture d'une fenêtre, déclenchée à partir du signal de synchronisation horizontale et encadrant la position présumée de la salve de synchronisation binaire. Le signal de validation est créé à partir de cette détection.

Les transitions du signal de salve sur une ligne transportant des données sont utilisées pour régénérer l'horloge binaire qui doit être maintenue pendant toute la durée du paquet.

Une variante de ces disposition consiste à transformer le signal NRZ en signal dit «RZ» (avec Retour à Zéro). Le spectre d'un tel signal a la particularité d'être constitué d'un spectre continu ayant un premier zéro à deux fois la fréquence binaire, auquel est superposé un spectre de raies à des multiples entiers impairs de la fréquence binaire. Un circuit oscillant résonnant à la fréquence binaire permet donc à la fois de reconnaître la présence des données et de régénérer l'horloge binaire. Toutefois, il est nécessaire que le paquet tout entier transporte suffisamment de transitions pour que les oscillations soient entretenues tout au long de la ligne.

Les niveaux binaires sont reconnus par comparaison entre le signal transporté sur une ligne de données et un seuil.

Les signal de données à la sortie du téléviseur est évalué au moyen de son «diagramme de l'œil». Il est rappelé que le diagramme d'œil est la superposition au cours d'une seule période binaire de tous les éléments binaires transmis pendant un temps suffisamment long. Les distorsions d'amplitude et de phase subies par le signal tout au long de la transmission ainsi que le bruit ajouté, ont pour conséquence de refermer le diagramme de l'œil à la fois verticalement et horizontalement. Le restitution des niveaux binaires sera donc d'autant plus sûre que le seuil et l'instant d'échantillonnage seront mieux centrés sur les axes d'ouverture maximal de l'œil.

Le contrôle automatique de gain du téléviseur modifie considérablement l'amplitude des données en fonction de la luminance moyennne de l'image. Dans les conditions extrêmes, la variation d'amplitude est de 9 dB.

En raison du resserrement vertical du diagramme de l'œil et du contrôle automatique de gain du téléviseur, le seuil est nécessairement adaptatif.

En raison du resserrement horizontal du diagramme de l'œil, la phase de l'horloge régénérée doit être la plus précise possible.

Différents démodulateurs DIDON sont connus actuellement.

Le circuit intégré TEA 2585/86 de THOMSON-EFCIS utilise un circuit oscillant à la fréquence

$$\frac{FB}{2}$$

(FB: fréquence binaire du signal DIDON; cette fréquence est un multiple entier de la fréquence ligne de télévision) pour reconnaître la ligne de données. L'horloge binaire est délivrée par un oscillateur à quartz à la fréquence 2.FB, suivi d'une logique choisissant, parmi les quatre transitions présentes sur une même période, la plus proche de l'axe vertical du diagramme de l'œil. Le circuit repère la valeur moyenne de la salve afin de définir le seuil par rapport à l'axe horizontal du diagramme de l'œil. Dans ce démodulateur le seuil est peu sensible au bruit et l'horloge est maintenue stable quel que soit le contenu des données; par contre la phase de l'horloge n'est pas assez précise.

Le circuit intégré SN 96533 de TEXAS INSTRUMENT utilise un circuit oscillant résonnant à la fréquence FB, excité par un signal avec retour à zéro (RZ). Le circuit repère la valeur crête de la salve pour définir le seuil. Dans ce démodulateur l'horloge est extraite du signal lui-même, de sorte que sa phase est bien adaptée au diagramme de l'œil et suit les fluctuations du signal. Par contre le seuil est sensible au bruit, en raison de la détection crête et l'horloge est dégénérée si le signal de données transporte peu de transitions.

Le démodulateur à composants discrets, réalisé par le CCETT, utilise une ligne à retard ouverte pour reconnaître, par corrélations, la salve à demi-fréquence binaire. L'horloge binaire est fournie par un oscillateur à quartz à la fréquence 8.FB suivi d'un diviseur par 8 calé en phase sur un front de la salve reconnue. Le seuil est défini par détection de la valeur moyenne de la salve. Dans ce démodulateur le seuil est peu sensible au bruit; l'horloge est stable quelle que soit la structure du signal de données et sa phase est relativement précise. Par contre l'horloge n'est pas automatiquement adaptée au signal de données puisque sa phase est établie une fois pour toutes, au début de la ligne.

Parmi ces démodulateurs connus c'est le dernier, celui à composants discrets, qui est le mieux adapté à la réception d'un signal dont l'œil se referme; il sert actuellement de circuit de référence. Les circuits monolithiques n'ont pas la qualité requise pour la réception de signaux en milieu perturbé; le circuit THOMSON résiste mieux au bruit que le circuit TEXAS qui, lui, résiste mieux aux distorsions de phase que le circuit THOMSON.

Tous ces démodulateurs connus nécessitent des réglages fins en usine (circuits oscillants, phase d'horloge, phase de la validation par rapport à la synchronisation ligne, dont certains impliquent des compromis); ils sont sujets à variation dans le temps.

De plus, étant de nature analogique, ces démodulateurs sont sensibles aux variations de température.

La présente invention a pour but un démodulateur permettant d'éviter ou, pour le moins, de réduire les inconvénients des démodulateurs connus.

Ceci est obtenu en recherchant, dans le signal lui-même, des formes vraisemblables du signal DIDON, en utilisant pour cela des caractéristiques différentielles et en mettant en œuvre des circuits logiques.

Selon l'invention un démodulateur DIDON numérique, est caractérisé en ce qu'il comporte: un dispositif de conversion analogique-numérique pour recevoir un signal vidéo de télévision et délivrer, à la fréquence n × FB (n entier positif au moins égal à 4 et FB fréquence binaire du signal DIDON), des signaux inter-échantillons successifs, représentatifs de l'évolution du signal vidéo d'une période d'échantillonnage à la suivante; un dispositif de reconnaissance pour reconnaître, en fonction de critères pré-établis, les configurations de n signaux inter-échantillons successifs qui sont représentatives d'un signal DIDON et fournir d'une part des signaux de vraisemblance de configuration et d'autre part des signaux de configuration qui correspondent à des transitions bas-haut, «+», haut-bas, «−», ou à des états stables hauts ou bas du signal DIDON et un circuit de reconstitution de données pour recevoir les signaux de configuration et reconstituer, lorsque les configurations sont vraisemblables, un signal de données et un signal d'horloge.

La présente invention sera mieux comprise et d'autres caractéristiques apparaîtront à l'aide de la description ci-après et des figures s'y rapportant qui représentent:
– la figure 1a, un schéma d'ensemble d'un démodulateur DIDON selon l'invention,
– la figure 1b, un tableau «données par rapport aux adresses» relatif à une mémoire de la figure 1a,
– la figure 2, des représentations graphiques de signaux obtenus avec le dispositif de la figure 1a,
– les figures 3a, 5 et 6, des schémas plus détaillés d'éléments de la figure 1a,
– la figure 3b, un tableau «données par rapport aux adresses» relatif à une mémoire de la figure 3a,
– la figure 4, un diagramme des temps relatif au démodulateur selon la figure 1a.

Dans les différents schémas les dispositifs de synchronisation précise, relevant de la technologie courante, n'ont pas été représentés en vue de rendre les dessins plus clairs et de simplifier l'exposé.

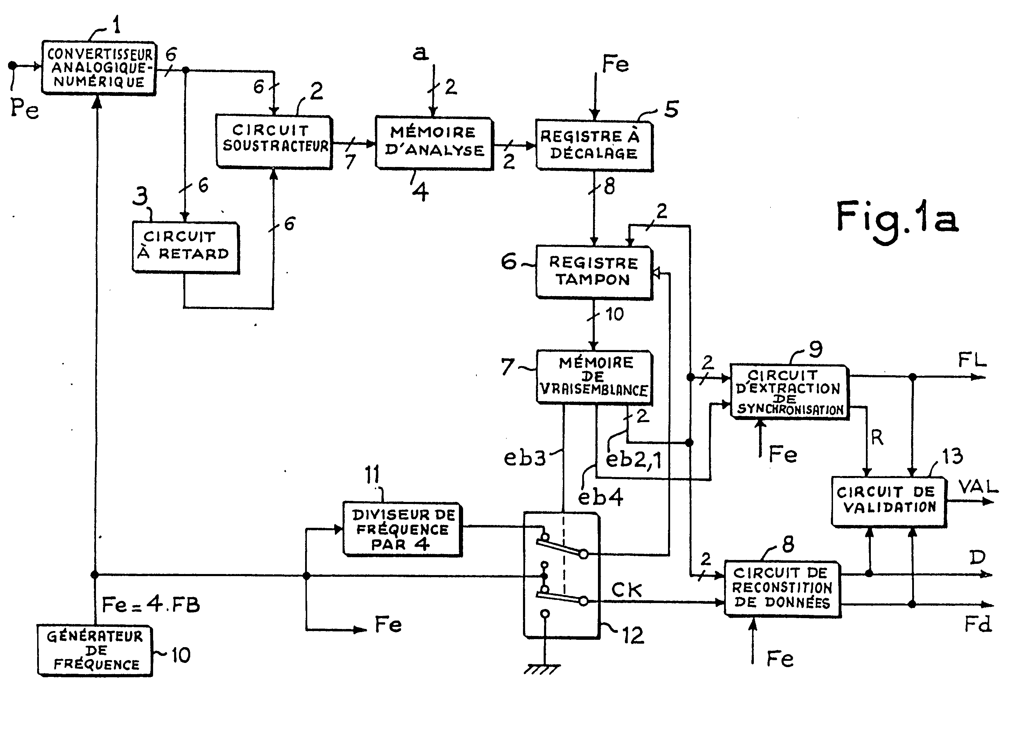

Un schéma d'ensemble d'un démodulateur DIDON est donné à la figure 1a.

La figure 1a montre une prise de péritélévision, Pe, d'un téléviseur standard, qui délivre un signal vidéo Sv. Ce signal vidéo est échantillonné à 4 fois la fréquence binaire DIDON et codé par 6 éléments binaires (e.b. dans ce qui suit) grâce à un convertisseur analogique-numérique 1 dont la fréquence d'échantillonnage Fe = 4.FB : fréquence binaire DIDON) est fournie par un générateur de fréquence 10.

Les différences inter-échantillons sont calculées au pas de

$$\frac{T}{4}$$

où T est la période DIDON (T = 1/FB) grâce à un circuit soustracteur 2 qui effectue la soustraction entre l'échantillon qu'il reçoit directement du convertisseur 1 et l'échantillon précédent, retardé de

$$\frac{T}{4}$$

par un circuit à retard 3.

Sur les différents schémas les liaisons multifilaires entre deux circuits sont représentées par un trait continu coupé par une petite barre à côté de laquelle est indiqué le nombre de conducteurs de la liaison, par exemple 6 pour chacune des liaisons aboutissant aux deux entrées du circuit soustracteur 2.

Une mémoire d'analyse, 4, constituée par une mémoire morte programmable (PROM dans la littérature anglo-saxonne), de capacité 512 × 2, est programmée en quatre pages correspondant à quatre seuils de comparaison choisis par un signal de commande, a, qui est fonction du bruit et peut être élaboré par le microprocesseur généralement placé en aval du démultiplexeur DIDON, lui-même placé à la sortie du démodulateur DIDON; il est également prévu une commande manuelle, par deux commutateurs, pour fournir la valeur de seuil, a, à la mémoire 4; cette mémoire analyse les signaux fournis par le circuit soustracteur 2 selon trois critères: différences nulle, positive, négative qui seront notées 0, + et − dans ce qui suit. A la sortie de la mémoire 4 ces différences sont représentées par des échantillons, à la fréquence Fe, de deux e.b.: 00, 01 et 10 respectivement pour les différences nulle, positive et négative.

Le signal vidéo Sv, traité par le convertisseur 1, est fourni par un téléviseur classique dont le contrôle automatique de gain fait que le niveau 1 des données peut varier de 350 à 2100 mV, le niveau 0 restant aligné sur le niveau du noir vidéo. Le convertisseur 1 qui code avec six éléments binaires ce qui représente $2^6$ = 64 niveaux de codage, détermine donc un quantum de codage de l'amplitude de

$$\frac{2100}{64} = 33{,}3\,\text{mV}.$$

Le plus petit niveau haut atteindra donc le niveau 11 et le seuil de comparaison, a, des différences inter-échantillons sera fixé au niveau 5. Pour les plus grands signaux vidéo, le niveau haut atteindra presque le niveau 64; la mesure des différences inter-échantillons pourra alors être plus fine en fixant le seuil au quart de l'échelle de codage (niveau 16). Deux autres seuils sont définis pour des amplitudes intermédiaires du signal vidéo Sv. A chacun de ces seuils correspond une page dans la mémoire d'analyse 4 et la mémoire indique, en fonction de l'adresse déterminée par le signal de sortie du circuit soustracteur 2:
− différence 0, si l'adresse est inférieure au seuil en valeur absolue,
− différence − ou + selon le signe du signal de sortie du circuit soustracteur, si l'adresse est supérieure au seuil en valeur absolue.

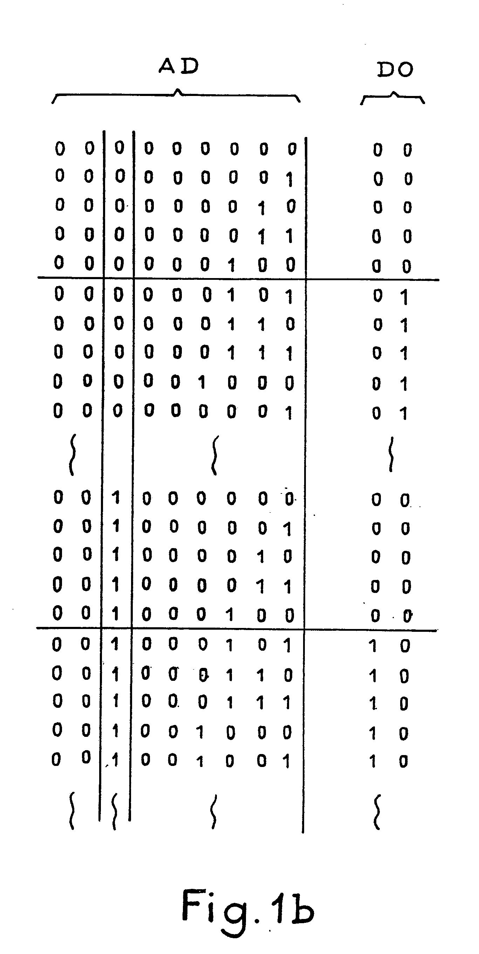

La figure 1b est un tableau en 11 colonnes, qui représente les «données, D0, par rapport aux adresses, AD» de la mémoire 4 de la figure 1a. Les deux premières colonnes correspondent à la page de la mémoire choisie, c'est-à-dire celle déterminée par la valeur du signal a; sur la figure 1b seule la page 00 correspondant au seuil de niveau 5 a été représentée. La troisième colonne correspond au signe du signal fourni par le circuit soustracteur 2 et les colonnes 4 à 9 correspondent à la valeur absolue de ce même signal. Les colonnes 10 et 11 sont relatives aux données de la mémoire. Deux traits horizontaux symbolisent les seuils (+5 et −5) de la page de mémoire considérée.

Un registre à décalage, 5, reçoit les échantillons de la mémoire 4; le registre 5 est un registre à quatre positions de deux e.b. Le registre 5 reçoit, respectivement sur ses deux accès, les deux e.b. des échantillons de sortie de la mémoire 4; il définit ainsi des fenêtres d'analyse formées de quatre échantillons successifs. Des fenêtres d'analyse successives sont définies par glissement, à la fréquence d'échantillonage Fe, du train des échantillons de deux e.b. sortant de la mémoire 4. Il y a donc 81 configurations possibles des quatre échantillons de deux e.b., dans la fenêtre d'analyse; en effet chacun des quatre échantillons d'une fenêtre peut prendre, comme il a été vu, l'une des valeurs 00,01 et 10 (la valeur 11 est exclue pour les échantillons), ce qui fait $3^4$ = 81 configurations possibles dans une fenêtre.

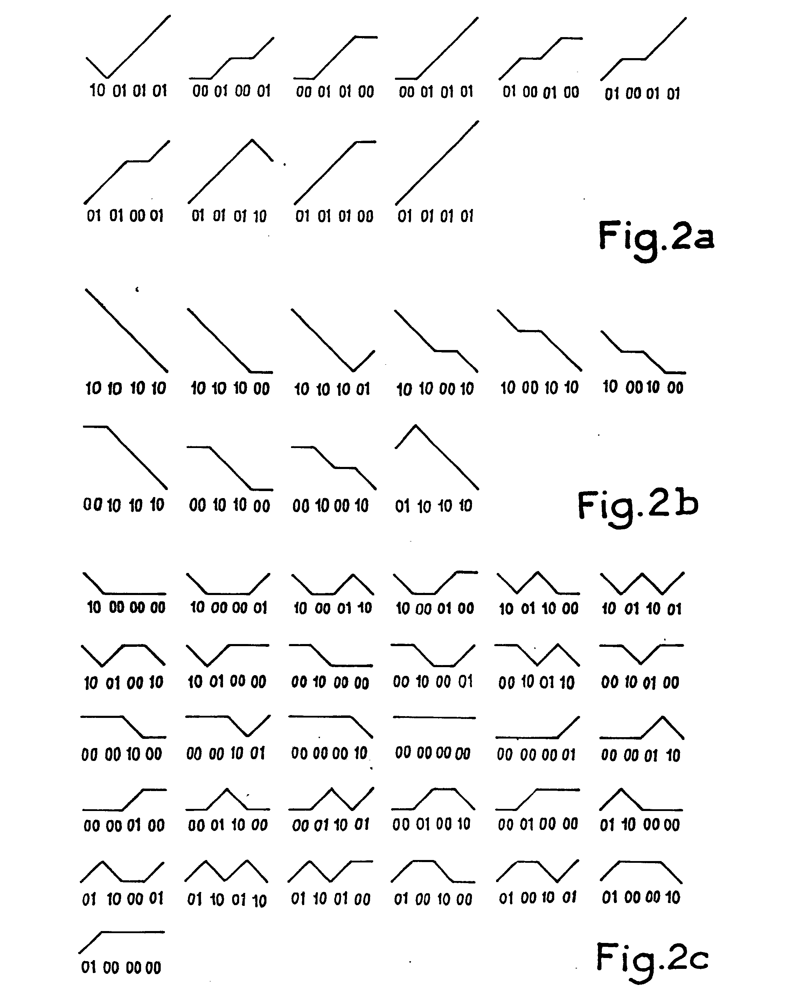

Parmi les 81 configurations possibles dans une fenêtre d'analyse, certaines sont représentatives d'un signal DIDON (critère de vraisemblance), d'autres ne le sont pas (critère d'invraisemblance). La figure 2 montre une partition de 51 des 81 configurations possibles dans la fenêtre d'analyse. Sur cette figure les échantillons 00.01 et 10 sont représentés respectivement par un tiret horizontal, un tiret montant de la gauche vers la droite et un tiret descendant de la gauche vers la droite; ces trois types de tirets présentent la même projection horizontale. La figure 2a représente les 10 contenus de fenêtre d'analyse qui sont considérés comme étant représentatifs d'une transition «+» du signal DIDON (variation positive pendant la fenêtre); le critère de détermination de la transition «+» est que, dans la fenêtre il y ait au moins trois échantillons 01 jointifs ou séparés par un échantillon 00 ou bien qu'il y ait deux échantillons 01 associés à deux échantillons 00 non jointifs. La figure 2b représente les 10 contenus de fenêtre d'analyse qui sont considérés comme étant représentatifs d'une transition «−» du signal DIDON (variation négative dans la fenêtre); le critère de détermination de la transition «−» est le même que pour la transition «+» mais en remplaçant les échantillons 01 par les échantillons 10. La figure 2c représente les 31 contenus de fenêtre d'analyse qui sont considérés comme étant représentatifs d'un état stable du signal DIDON (pas de variation dans la fenêtre); le critère de détermination d'un état stable est que, dans la fenêtre, il y ait au plus un échantillon 01 (ou 10) ou au plus un échantillon 01 et un échantillon 10 ou au plus deux échantillons 01 (ou 10) mais séparés par un échantillon 10 (ou 01). Les 30 autres contenus possibles de la fenêtre, tels que 10-10-00-00, ne sont pas considérés comme étant représentatifs d'un signale DIDON.

Une mémoire de vraisemblance, 7, figure la, constituée par une mémoire morte programmable, de capacité $1024 \times 4$, est programmée en fonction du tableau de la figure 2; elle reçoit, à travers un registre tampon 6, les signaux de sortie du registre à décalage 5.

La mémoire 7 signale à l'aide de deux e. b. de configuration, eb 2, 1, les configurations vraisemblablement représentatives d'une transition «+» (code 01 : e. b. 2 = 0), d'une transition «−» (code 10), d'un état stable haut (code 11) et d'un état stable bas (code 00); un état stable est dit haut si la première transition qui le précède est une transition «+» et il est dit bas si cette transition est une transition «−». La mémoire 7 signale, à l'aide d'un troisième e. b., eb 3, les configurations invraisemblables c'est-à-dire celles qui ne sont pas reconnues comme étant représentatives d'un signal DIDON. La mémoire 7 signale également, par un quatrième e. b., eb 4, les transitions «−»; ceci permettra, dans les circuits en aval de la mémoire de vraisemblance, d'extraire la synchronisation ligne.

Lorsqu'une configuration est vraisemblable (tableau de la figure 2), l'action de la mémoire 7 est, sous certaines réserves indiquées plus loin, maintenue pendant quatre périodes d'échantillonnage grâce à un commutateur électronique double, 12, qui est commandé par le signal eb 3 et qui reçoit sur une première entrée le signal d'échantillonnage à la fréquence Fe et sur une seconde entrée un signal à fréquence

$$\frac{Fe}{4}$$

provenant du passage du signal d'échantillonnage dans un diviseur de fréquence, 11, de rapport de division égal à 4; la première sortie du commutateur 12 fournit le signal de commande de transfert du registre 6: signal d'échantillonnage, à fréquence Fe, si la configuration étudiée par la mémoire 7 n'est pas vraisemblable (eb 3 = 1) et signal à fréquence

$$\frac{Fe}{4}$$

si la configuration est vraisemblable (eb 3 = 0); la seconde sortie du commutateur 12 délivre un signal CK qui est le signal d'échantillonnage lorsque eb 3 = 0 et qui est de valeur zéro lorsque eb 3 = 1. L'action de la mémoire 7 est ainsi déclenchée toutes les quatre périodes d'échantillonnage ou toutes les périodes, selon que la configuration dans la fenêtre d'analyse est vraisemblable ou ne l'est pas.

La vraisemblance d'un signal DIDON dépend également de la forme trouvée pendant la période DIDON précédente. Ainsi une transition «−» (code 10 pour eb 2, 1) ou un état stable haut (code 11 pour eb 2, 1) sont incompatibles avec une transition «−» trouvée à la période précédente; de même une transition «+» (code 01 pour eb 2, 1) ou un état stable bas (code 00 pour eb 2, 1) sont incompatibles avec une transition «+» trouvée à la période précédente; quant à un état stable haut il n'est compatible qu'avec un état stable haut ou une transition «−» trouvés à la période suivante tandis qu'un état stable bas n'est compatible qu'avec un état stable bas ou une transition «+» trouvés à la période suivante.

Pour tenir compte de la configuration lors de la période précédente, la mémoire 7 de la figure 1a est une mémoire partagée en quatre pages et ces pages sont adressées par la valeur du code fourni par le signal eb 2, 1, c'est-à-dire par le code lu à la période précédente et envoyé à l'entrée du registre 6. Dans chaque page les configurations vraisemblables mais incompatibles avec la configuration précédente sont déclarées invraisemblables et déclenchent un nouvel adressage de la mémoire 7 à la fréquence d'échantillonnage Fe (signal eb 3 = 1). Il est à noter que la mémoire 7 signale, par le signal eb 4, non seulement les transitions «−» compatibles avec les configurations précédentes mais également les transitions «−» qui suivent immédiatement un état stable bas (eb 2, 1 = 00) et qui sont significatives de la synchronisation ligne.

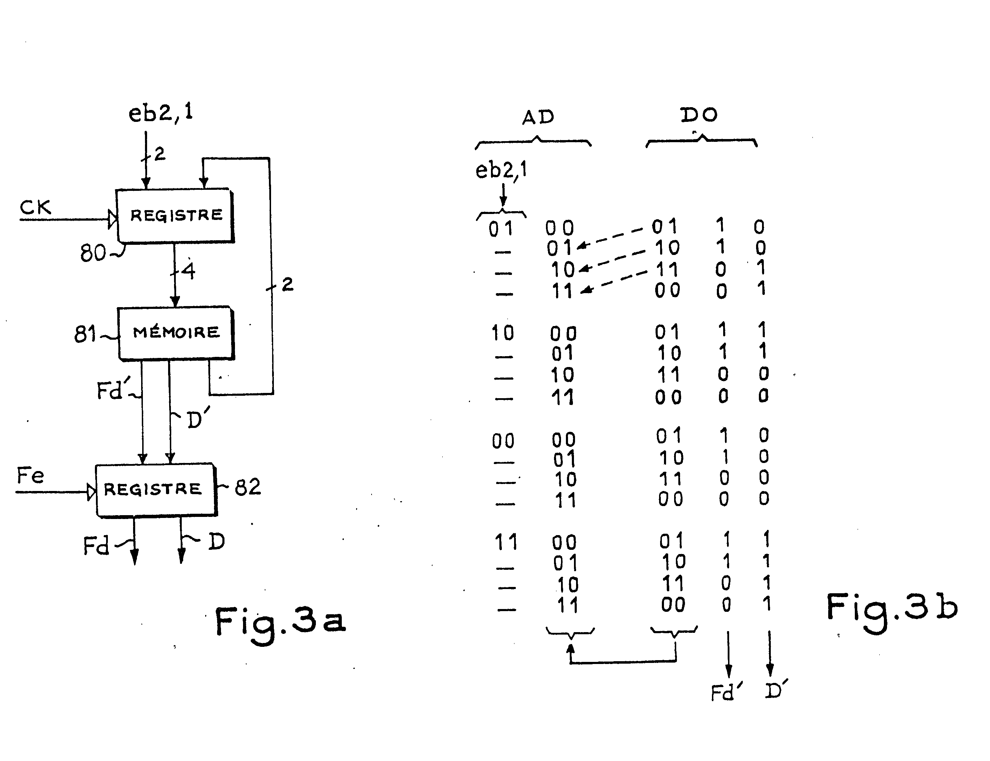

Le signal de données DIDON, D, et l'horloge binaire, Fd (avec Fd = FB), en phase avec les éléments du signal de données, sont restitués par un circuit de reconstitution de données, 8, qui reçoit les signaux eb 2, 1, CK et Fe; ce circuit de reconstitution de données est représenté sur la figure 3a et sera décrit plus loin.

Le signal de synchronisation ligne, FL, est élaboré au moyen d'un circuit d'extraction de synchronisation, 9, qui sera décrit plus loin et qui reçoit les signaux eb 2, 1 et eb 4 de la mémoire 7 et le signal d'échantillonnage Fe du générateur de fréquence 10.

Il est à noter que, lorsque les lignes du signal de télévision ne transportent pas de données, elles transportent en général de la vidéo dont les transitions sont détectées; la probabilité n'est pas nulle que certaines de ces transition soient représentatives, au cours d'une ligne, d'un signal NRZ évidemment sans signification mais qui pourrait être traité, par le démultiplexeur qui suit le démodulateur, comme un signal DIDON. Il est donc indispensable d'élaborer un signal de validation de données permettant d'assurer que la ligne transporte réellement des données; c'est le signal VAL fourni par le circuit de validation 13 de la figure 1a; ce circuit, qui sera décrit plus loin, reçoit les signaux de données DIDON, D, et l'horloge binaire Fd fournis par le circuit 8 et les signaux de sortie du circuit 9.

La figure 3a montre comment est réalisé le circuit de reconstitution de données, 8, de la figure 1a. Ce circuit est constitué d'une mémoire morte programmable, 81, d'une capacité de 16 × 4 précédée d'un registre tampon, 80, à quatre cellules et suivi d'un registre tampon, 82, à deux cellules. Le registre 80 est commandé par le signal CK délivré par la seconde sortie du commutateur 12; ainsi le registre 80 est commandé à la fréquence d'échantillonnage en cas de vraisemblance de la configuration étudiée par la mémoire 7 (eb3 = 0 et CK = Fe) ou maintenu dans son état précédent en cas d'invraisemblance (eb3 = 1 et CK = 0). Le registre 82 est commandé à la fréquence d'échantillonnage Fe.

La mémoire 81 de la figure 3a constitue, avec son registre d'adresses 80, 4 compteurs définissant chacun 4 états progressant par rebouclage de 2 e. b. de données sur les 2 e. b. d'adresse de poids faible. Chacun des compteurs est sélectionné par les deux e. b. de codage des transitions «+», «−», et des états stables hauts et bas délivrés par la mémoire 7 de la figure 1a (signal eb2, 1). Ces quatre compteurs réalisés à l'aide d'une mémoire rebouclée à travers son registre d'adresse, 80, sont:

— un compteur de transition «+», adressé par le code des transitions «+» (eb2, 1 = 01) et founissant, dans une fenêtre de durée

$$\frac{4}{Fe}$$

et au rythme du signal d'échantillonnage Fe, les quatre e. b. du signal de données D', 0011, et les quatre e. b., 1100, qui restituent une horloge binaire, Fd', par le passage du niveau 1 au niveau 0 en milieu de fenêtre,

— un compteur de transition «−», adressé par eb2, 1 = 10 et fournissant, dans une fenêtre, les quatre e. b., 1100, du signal de données D' et les quatre e. b., 1100, du signal d'horloge, Fd',

— un compteur d'état stable bas, adressé par eb2, 1 = 00 et fournissant, dans une fenêtre, les quatre e. b., 0000, du signal D' et les quatre e. b., 1100, du signal Fd',

— un compteur d'état stable haut adressé par eb2, 1 = 11 et fournissant, dans une fenêtre, les quatre e. b., 1111, du signal D' et les quatre e. b., 1100, du signal Fd'.

La figure 3b est un tableau en huit colonnes, qui représente les «données par rapport aux adresses» de la mémoire 81 de la figure 3a. Les quatre premières colonnes sont les colonnes d'adresse, AD, avec en première et deuxième colonne le signal eb2, 1 qui adresse l'un des quatre compteurs, en troisième et quatrième colonne les signaux fournis par rebouclage de la mémoire 81 à travers son registre d'adresse 80; trois flèches en traits interrompus montrent, sur la figure 3b, ce rebouchage dans le cas du comptage des transitions «+» (eb2, 1 = 01, colonnes 1 et 2). Les quatre dernières colonnes du tableau sont relatives aux données, D0; les cinquième et sixième colonnes sont relatives aux données, D0; les cinquième et sixième colonnes du tableau sont relatives aux données utilisées dans le rebouclage, la septième colonne est relative au signal d'horloge Fd' avec son passage de 1 à 0 en milieu de fenêtre et la huitième colonne est relative au signal de données DIDON, D'.

Le registre 82, qui reçoit les signaux Fd' et D' et est commandé par le signal d'échantillonnage Fe, est destiné à éviter les signaux parasites qui apparaissent lors des changements d'adresse; le registre 82 délivre le signal d'horloge reconstitué, Fd, et le signal de données reconstitué, D.

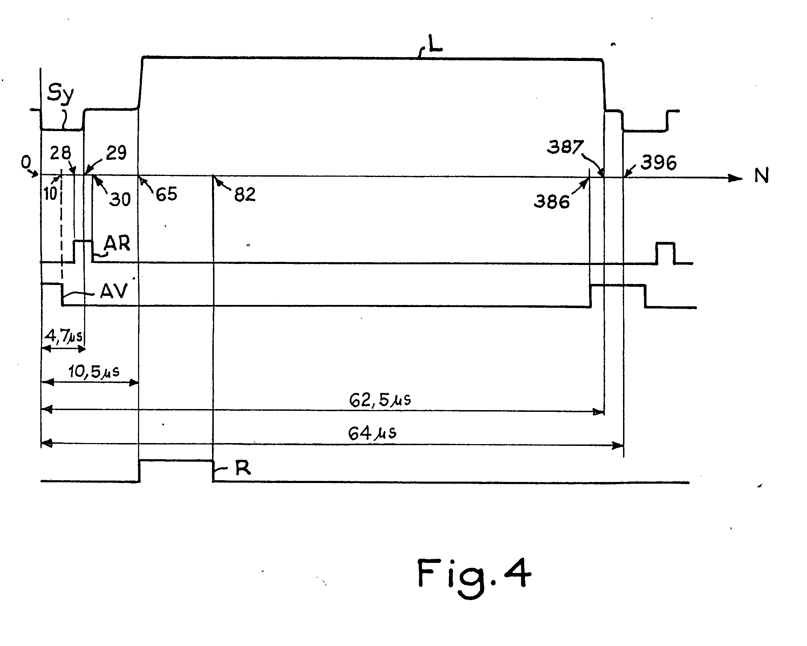

La figure 4 est un diagramme des temps qui représente, en fonction des états N d'un compteur: une ligne de télévision L, un signal de fenêtre de front arrière, AR, du signal de synchronisation ligne, un signal de fenêtre du front avant, AV, du signal de synchronisation ligne et un signal de fenêtre, R, qui sert, dans le circuit de validation 13 de la figure 1a, à déterminer un signal de validation des données fournies par le démodulateur. Sur la figure 4 les proportions n'ont pas été respectées sur l'axe des temps, c'est-à-dire sur l'axe des états N, de manière à rendre plus claires certaines parties du schéma.

Dans le cas de l'exemple décrit où les données DIDON sont transmises, par le procédé SECAM, sur des lignes de 64 $\mu$s, la procédure DIDON a fixé la fréquence binaire DIDON, FB, à 397 fois la fréquence de ligne soit 397 × 15,625 kHz = 6,203125 MHz.

A partir du front avant du signal de synchronisation ligne, Sy, il s'écoule: jusqu'au front arrière de ce même signal 4,7 $\mu$s, jusqu'au début des signaux de données 10,5 $\mu$s, jusqu'au la fin des signaux de données 62,5 $\mu$s et jusqu'au front avant de l'impulsion de synchronisation de la ligne suivante 64 $\mu$s. En comptant en périodes du signal FB c'est-à-dire en période d'un signal dont la fréquence est celle du signal d'échantillonnage, Fe, divisée par 4, et en faisant partir le comptage au début de l'impulsion de synchronisation (N = 0),

— le front arrière apparaît pendant les états 28, 29, 30 (fenêtre AR, figure),

— le front avant suivant apparaît pendant les états 386 à 10 (fenêtre AV, figure 4),

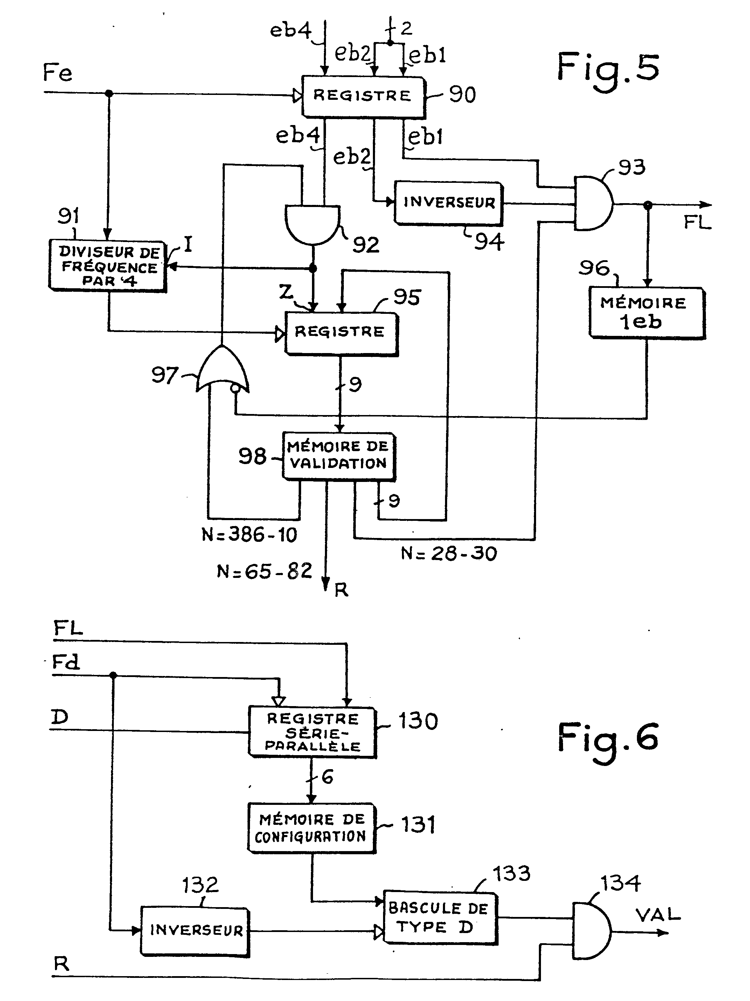

— le signal de validation, c'est-à-dire la reconnaissance d'un certain nombre (dans l'exemple décrit) des 16 périodes de la salve binaire en début du signal de données, n'est autorisé que pendant la fenêtre comprise entre N = 65 et N = 82 (fenêtre R, figure 4). La figure 5, qui est une vue détaillée du circuit d'extraction de synchronisation, 9, de la figure 1a, montre comment est obtenu le signal de synchronisation ligne, FL, et les différentes fenêtres dont il a été question ci-avant.

La figure 5 montre un registre tampon, 90, qui reçoit les signaux eb2, 1 et eb4 de la mémoire de vraisemblance 7, de la figure 1; il est rappelé que eb2, 1 (ou, ce qui revient au même les signaux eb2 et eb1 pris dans cet ordre) prend les valeurs 01, 10, 11 et 00 respectivement lors de la reconnaissance par la mémoire 7 d'une transition «+», d'une transiton «−», d'un état stable haut, d'un état stable bas vraisemblables, tandis que eb4 égal à 1 correspond à la reconnaissance des transitions «−» vraisemblables (comme eb 2, 1 = 10) et des transitions «−» qui suivent un état stable bas et qui, comme le montre le signal L de la figure 4, sont représentatives d'une impulsion de synchronisation ligne.

Le registre 90 est commandé par le signal d'échantillonnage Fe; il est relié par sa sortie correspondant au signal eb 4 à la première entrée d'une porte ET, 92. La sortie de la porte ET 92 est reliée à l'entrée de remise à zéro, Z, d'un registre tampon 95 et à l'entrée d'initialisation, 1, d'un circuit diviseur par quatre, 91, dont le signal d'entrée est le signal d'échantillonnage et dont le signal de sortie est le signal de commande du registre 95. Ce registre est un registre à 9 éléments dont les 9 sorties sont reliées aux 9 entrées d'une mémoire programmable, 98, appelée mémoire de validation, de capacité 512 × 12, rebouclée sur les 9 entrées du registre 95 pour former un compteur capable de compter de 0 à 396; c'est le compteur fournissant les états N = 0 à N = 396 dont il a été question lors de la description de la figure 4.

Les sorties du registre 90 correspondant aux signaux eb 1 et eb 2 sont respectivement reliées à la première entrée d'une porte ET, 93, et à la deuxième entrée de la porte ET, 93, à travers un inverseur 94; la troisième entrée de la porte 93 reçoit un signal 1 quand N prend les valeurs 28 à 30 (fenêtre AR de la figure 4) et fournit le signal FL de synchronisation ligne reconstitué. Ce signal FL est appliqué à l'entrée d'une mémoire à un élément, 96, appelée mémoire 1 eb ci-après; cette mémoire 1 eb est reliée, par sa sortie, à la première entrée, avec inversion, d'une porte OU 97 qui reçoit sur sa seconde entrée, sans inversion, un signal 1 quand N prend les valeurs 386 à 10 (fenêtre AV de la figure 4) et dont le signal de sortie est appliqué sur la seconde entrée de la porte ET 92. La mémoire de validation, 98, fournit de plus, sur une de ses sorties, le signal R c'est-à-dire un signal qui prend la valeur 1 quand N prend les valeurs 65 à 82 (fenêtre R de la figure 4).

Les transitions «−», signalées par la valeur 1 du signal eb 4 appliqué au registre 90, fournissent à la porte ET 92 des impulsions pour commander la remise à zéro du registre 95. Il est à remarquer que, selon l'état du signal eb 3, c'est-à-dire de l'e. b. d'invraisemblance, la durée de l'impulsion de remise à zéro fournie par le registre 90 est de une ou quatre périodes d'échantillonnage. La porte ET 92 conditionne la transmission des impulsions de remise à zéro par le signal de fenêtre de recherche du front avant, AV, fourni par la mémoire 98. L'impulsion de remise à zéro est considérée comme étant représentative du front avant de l'impulsion de synchronisation ligne.

Lorsqu'elles apparaissent pendant le signal de fenêtre de recherche du front arrière, AR, fourni par la mémoire 98, toutes les transitions «+», signalées par le signal eb 2, 1 de la mémoire 7 de la figure 1a (code 01, c'est-à-dire eb 2 = 0 et eb 1 = 1), sont représentatives du signal de synchronisation ligne de télévision, Sy, ou plus exactement de la partie arrière de ce signal; le signal de synchronisation ligne reconstitué, FL, est le signal de sortie de la porte ET 93.

Comme il a été vu ci-avant, la mémoire 98 constitue, avec le registre 95, un compteur qui compte de 0 à 396 au rythme du signal d'échantillonnage divisé par quatre, c'est-à-dire au rythme de la fréquence binaire DIDON, FB.

Tant que le signal de synchronisation ligne reconstitué, FL, n'a pas été trouvé, la mémoire 1 eb, 96, est à 0; toute transition «−» signalée par le signal eb 4 remet le compteur dans l'état N = 0. Le premier front arrière de synchronisation ligne de télévision, qui est trouvé par la porte 93 (pendant les états 28 à 30 du compteur), fait que le compteur ne peut plus être remis à zéro que par les transitions «−» (eb 4 = 1) apparaissant à fréquence de ligne (pendant les états 386 à 10 du compteur).

Comme il a été indiqué plus avant, le signal R, fourni par la mémoire 98 et correspondant aux états 65 à 82 du compteur, est destiné à valider la reconnaissance de 6 périodes des deux octets de la salve de synchronisation qui apparaît au début du signal de données. Le signal de reconnaissance de la salve, validé par le signal R, est le signal VAL obtenu à l'aide du circuit de validation 13 de la figure 1a dont le schéma détaillé est donné par la figure 6. La fonction à réaliser par le circuit de validation 13 est de reconnaître la configuration 010101 ou 101010 pendant la durée de la fenêtre R car, à partir du moment où le début d'une impulsion de synchronisation ligne de télévision est reconnu, si des données DIDON sont transmises il y aura une suite de six éléments binaires, formée de 1 et de 0 alternés, pendant les états 65 à 82 du compteur.

La figure 6 montre que le circuit de validation 13 de la figure 1a comporte un registre série-parallèle 130, à six sorties qui reçoit, sur son entrée de signal, le signal de données, reconstitué, D, sur son entrée de commande de décalage le signal d'horloge, reconstitué, Fd, et sur une entrée de remise à zéro le signal de synchronisation ligne reconstitué, FL. Les six sorties du registre 130 sont reliées aux six entrées d'une mémoire de configuration, 131, constituée par une mémoire morte programmable, de capacité 64 × 1 dont la sortie est reliée à l'entrée de signal d'une bascule, 133, de type D, c'est-à-dire d'une bascule qui prend, lors d'une impulsion appliquée sur son entrée d'horloge, l'état du signal appliqué sur son entrée de signal. Sur l'entrée d'horloge de la bascule 133 est appliqué inverseur 132. La sortie de la bascule 133 est reliée à la première entrée d'une validation de données et dont la sortie fournit le signal de validation de données.

Le registre 130 qui reçoit les données reconstituées, D, et qui est décalé par le signal d'horloge reconstitué, Fd, adresse la mémoire 131 qui est programmée pour reconnaître les configurations 010101 et 101010; la reconnaissance d'une de ces configurations déclenche l'émission du signal VAL mis en forme grâce à la bascule 133 et dont l'envoi n'est autorisé par la porte ET 134 que s'il a été produit pendant les états 65 à 82 du compteur 95, 98 de la figure 5 (signal R appliqué sur la porte ET 134 de la figure 6).

La présente invention n'est pas limitée à l'exemple décrit, elle s'étend, en particulier, à tout démodulateur comportant un dispositif de conversion analogique-numérique d'entrée (éléments 1 à 4 de la figure 2) dont la fréquence d'échantillonnage est un multiple entier, n, de la fréquence binaire FB du signal DIDON et dont le signal de sortie est analysé; cette analyse consiste à trouver des configurations vraisemblables du signal DIDON sur des durées égales à la période

$$T = \frac{1}{FB}$$

puis, grâce à ces configurations vraisemblables, à reconstituer le signal de données avec son horloge ainsi que, éventuellement, le signal de synchronisation ligne et des signaux de validation basés par exemple sur la reconnaissance ou la non-reconnaissance de la salve binaire d'une ligne de télévision comportant des données DIDON. Pour ce qui est du dispositif de conversion analogique-numérique d'entrée, le chiffre n, qui définit sa fréquence d'échantillonnage, peut être pris différent de quatre, néanmoins la valeur n = 2 est à exclure car le signal obtenu pendant la période DIDON (1/FB) serait trop peu précis pour permettre d'estimer sa vraisemblance ou son invraisemblance et la valeur n = 3 serait un peu faible pour juger de la vraisemblance du signal obtenu; par ailleurs le dispositif de conversion analogique-numérique pourrait, par exemple, être réalisé à l'aide d'un amplificateur à commande automatique de gain, suivi d'un convertisseur analogique-numérique, lui-même suivi par une mémoire d'analyse du genre de la mémoire 4 de la figure 1a.

## Revendications

1. Démodulateur DIDON numérique, caractérisé en ce qu'il comporte: un dispositif de conversion analogique-numérique (1–4) pour recevoir un signal vidéo de télévision et délivrer, à la fréquence n × FB (n entier positif au moins égal à 4 et FB fréquence binaire du signal DIDON), des signaux inter-échantillons successifs, représentatifs de l'évolution du signal vidéo d'une période d'échantillonnage à la suivante; un dispositif de reconnaissance (5–7, 11, 12) pour reconnaître, en fonction de critères pré-établis, les configurations de n signaux inter-échantillons successifs qui sont représentatives d'un signal DIDON et fournir d'une part des signaux de vraisemblance de configuration et d'autre part des signaux de configuration qui correspondent à des transitions bas-haut, «+», haut-bas, «−», ou à des états stables hauts ou bas du signal DIDON; et un circuit de reconstitution de données (8) pour recevoir les signaux de configuration et reconstituer, lorsque les configurations sont vraisemblables, un signal de données (D) et un signal d'horloge (Fd).

2. Démodulateur selon la revendication 1, caractérisé en ce que le dispositif de conversion comporte: un convertisseur-numérique (1) pour fournir, à la fréquence n × FB, des échantillons du signal vidéo; un ensemble soustractif (2, 3) pour fournir, à la fréquence n × FB, des signaux soustractifs représentatifs de la différence entre les échantillons délivrés par le convertisseur et ces mêmes échantillons retardés de

$$\frac{1}{n \times FB}$$

et une mémoire d'analyse (4) pour recevoir les signaux soustractifs, cette mémoire étant programmée pour délivrer, comme signal inter-échantillons, un signal de différence 0 pour un signal soustractif inférieur, en valeur absolue, à un seuil donné (a) et un signal de différence + ou −, selon le signe du signal soustractif, si le signal soustractif est supérieur, en valeur absolue, au seuil donné.

3. Démodulateur DIDON selon la revendication 2, caractérisé en ce que le dispositif de reconnaissance comporte: un registre (5) pour recevoir les signaux de différence et pour fournir, à la fréquence n.FB, un signal de fenêtre formé des n derniers signaux de différence reçus; un circuit de mémoire (6, 7) pour recevoir les signaux de fenêtre, le circuit de mémoire comportant une entrée de commande, et des moyens d'étude (6, 7) pour, en fonction des critères pré-établis, élaborer les signaux de configuration (eb 2, 1) et, comme signaux de vraisemblance de configuration, un premier signal (eb 3) de reconnaissance des configurations invraisemblables et un second signal (eb 4) de reconnaissance de transition de front avant de signal de synchronisation et de reconnaissance de transition de même type (bas-haut ou haut-bas) que la transition de front avant; un interrupteur électronique (12), commandé par le premier signal, pour fournir, sur une sortie reliée à l'entrée de commande du circuit de mémoire, un signal à la fréquence FB ou un signal à la fréquence n × FB selon que le premier signal correspond à une configuration vraisemblable ou invraisemblable.

4. Démodulateur DIDON selon la revendication 3, caractérisé en ce que le circuit de reconstitution de données (8) comporte une entrée de signal pour recevoir les signaux de configuration (eb 2, 1), une entrée de prise en compte des signaux de configuration reçus pour recevoir de l'interrupteur électronique (12) le signal à la fréquence n × FB ou aucun signal selon que le premier signal correspond à une configuration vraisemblable ou invraisemblable, une première sortie pour délivrer, lorsque la configuration est vraisemblable, un signal de données reconstitué (D), de durée 1/FD, prenant les valeurs logiques successives 01, 10, 00 et 11, pendant des durées

$$\frac{1}{2FD}$$

respectivement lorsque la configuration est une transition «+», «−», un état stable bas ou un état stable haut, et une seconde sortie pour délivrer un signal d'horloge, reconstitué (Fd), en synchronisme avec le milieu du signal de données reconstitué.

5. Démodulateur DIDON selon la revendication 3, caractérisé en ce qu'il comporte un circuit d'extraction de synchronisation (9) pour, à partir des signaux de configuration (eb 2, 1) et du second signal (eb 4), reconnaître le front avant des signaux de synchronisation ligne du signal de télévision, et en ce que ce circuit d'extraction de synchronisation comporte un compteur (95, 98) pour, à partir de l'instant de reconnaissance du front avant d'un signal de synchronisation ligne, permettre l'élaboration d'un signal de synchronisation ligne, permettre l'élaboration d'un signal de synchronisation ligne, reconstitué (FL) et d'un signal de fenêtre de validation de données (R).

6. Démodulateur DIDON selon les revendications 4 et 5 dans leur ensemble, caractérisé en ce qu'il comporte un circuit de validation (13) pour élaborer un signal de validation de données (VAL) et en ce que ce circuit de validation comporte, à cet effet, des moyens (130, 131) de reconnaissance de la salve de synchronisation qui apparaît au début d'un signal de données DIDON, par reconnaissance d'un nombre prédéterminé de 0 et de 1 alternés dans le signal de données reconstitué (D), au cours du signal de fenêtre de validation de données (R).

**Patentansprüche**

1. Digitaler DIDON-Demodulator, dadurch gekennzeichnet, dass er enthält: eine Analog/Digital-Umsetzvorrichtung (1–4) zum Empfangen eines Fernseh-Videosignals und Abgeben von die Frequenz n × FB (n ganzzahlig positiv wenigstens gleich 4 und FB gleich binäre Frequenz des DIDON-Signals) aufweisenden aufeinanderfolgenden Zwischenabtastprobensignalen, welche die Entwicklung des Videosignals von einer Abtastprobe zur nächsten darstellen; eine Erkennungsvorrichtung (5–7, 11, 12) zum in Abhängigkeit von zuvor festgelegten Kriterien erfolgenden Erkennen der Konfigurationen von n aufeinanderfolgenden Zwischenabtastprobensignalen, welche repräsentativ für ein DIDON-Signal sind, und Liefern einerseits der Konfigurationswahrscheinlichkeitssignale und andererseits der Konfigurationssignale, welche Übergängen niedrig-hoch, «+», hochniedrig, «−», oder hohen oder niedrigen stabilen Zuständen des DIDON-Signals entsprechen; und eine Daten-Wiederherstellungsschaltung (8) zum Empfangen der Konfigurationssignale und Wiederherstellen eines Datensignals (D) und eines Taktsignals (Fd), wenn die Konfigurationen wahrscheinlich sind.

2. Demodulator nach Anspruch 1, dadurch gekennzeichnet, dass die Umsetzvorrichtung umfasst: einen Digital-Umsetzer (1), um mit der Frequenz n × FB Abtastproben des Videosignals zu liefern; eine Subtrahiergruppe (2, 3), um mit der Frequenz n × FB Subtraktonssignale zu liefern, welche die Differenz zwischen den vom Umsetzer gelieferten Abtastproben und diesen selben, um

$$\frac{1}{n \times FB}$$

verzögerten Abtastproben darstellen; und einen Analyse-Speicher (4), um die Subtraktionssignale zu empfangen, wobei dieser Speicher so programmiert ist, dass er als Zwischenabtastprobensignal ein Differenzsignal 0 für ein Subtraktonssignal, das im Absolutwert kleiner als ein gegebener Schwellwert (a) ist, und ein Differenzsignal + oder −, je nach dem Vorzeichen des Subtraktonssignals, wenn das Subtraktonssignal im Absolutwert grösser als der gegebene Schwellwert ist, zu liefern.

3. DIDON-Demodulator nach Anspruch 2, dadurch gekennzeichnet, dass die Erkennungsvorrichtung enthält: ein Register (5) zum Empfangen der Differenzsignale und Liefern eines aus den n letzten empfangenen Differenzsignalen gebildeten Fenstersignals mit der Frequenz n.FB; eine Speicherschaltung (6, 7) zum Empfangen der Fenstersignale, wobei die Speicherschaltung einen Steuereingang und Untersuchungsmittel (6, 7) enthält, um in Abhängigkeit von den zuvor festgelegten Kriterien die Konfigurationssignale (eb 2, 1) und als Konfigurationswahrscheinlichkeitssignale ein erstes Erkennungssignal (eb 3) für unwahrscheinliche Konfigurationen sowie ein zweites Erkennungssignal (eb 4) für den Vorderflankenübergang des Synchronisationssignals und für den Übergang gleicher Art (niedrig-hoch oder hochniedrig) wie der Vorderflankenübergang zu erzeugen; einen elektronischen Unterbrecher (12), der durch das erste Signal gesteuert wird, um an einem mit dem Steuereingang der Speicherschaltung verbundenen Ausgang ein Signal der Frequenz FB oder ein Signal der Frequenz n × FB zu liefern, je nachdem, ob das erste Signal einer wahrscheinlichen oder einer unwahrscheinlichen Konfiguration entspricht.

4. DIDON-Demodulator nach Anspruch 3, dadurch gekennzeichnet, dass die Schaltung zur Wiedergewinnung von Daten (8) einen Signaleingang aufweist, um die Konfigurationssignale (eb 2, 1) zu empfangen, einen Eingang zur Berücksichtigung der empfangenen Konfigurationssignale, um vom elektronischen Unterbrecher (12) das Signal der Frequenz n × FB oder keinerlei Signale zu empfangen, je nachdem, ob das erste Signal einer wahrscheinlichen oder einer unwahrscheinlichen Konfiguration entspricht, einen ersten Ausgang, um bei einer wahrscheinlichen Konfiguration ein wiederhergestelltes Datensignal (D) der Dauer 1/FD zu liefern, welches die aufeinanderfolgenden Logikwerte 01, 10, 00 und 11 jeweils während Dauern

$$\frac{1}{2FD}$$

annimmt, wenn die Konfiguration ein Übergang «+», «−», ein stabiler Zustand bzw. ein hoher Zustand ist, und einen zweiten Ausgang aufweist, um ein wiederhergestelltes Taktsignal (Fd) synchron mit der Mitte des wiederhergestellten Datensignals auszugeben.

5. DIDON-Demodulator nach Anspruch 3, dadurch gekennzeichnet, dass er eine Synchronisations-Extraktionsschaltung (9) umfasst, um aus den Konfigurationssignalen (eb 2, 1) und aus dem zweiten Signal (eb 4) die Vorderflanke der Zeilen-Synchronisationssignale des Fernsehsignals zu erkennen, und dass diese Synchronisations-Extraktionsschaltung einen Zähler (95, 98) aufweist, um ab dem Zeitpunkt des Erkennens der Vorderflanke eines Zeilen-Synchronisationssignals die Erzeugung eines wiederhergestellten Zeilen-Synchronisationssignals (FL) und eines Fenstersignals zur Freigabe von Daten (R) zu ermöglichen.

6. DIDON-Demodulator nach den Ansprüchen 4 und 5 in ihrer Gesamtheit, dadurch gekennzeichnet, dass er eine Freigabeschaltung (13) enthält, um ein Daten-Freigabesignal (VAL) zu erzeugen, und dass diese Freigabeschaltung zu diesem Zweck Mittel (130, 131) zum Erkennen der Synchronisationssalve enthält, welche zu Beginn eines DIDON-Datensignals erscheint, durch Erkennen einer vorbestimmten Anzahl von abwechselnden Zeichen 0 und 1 in dem wiederhergestellten Datensignal (D) im Verlauf des Daten-Freigabefenstersignals (R).

## Claims

1. Digital DIDON demodulator, characterized in that it comprises: an analog/ digital converting device (1–4) for receiving a television video signal and supplying, at the frequency $n \times FB$ (n positive integer at least equal to 4 and FB being the binary frequency of the DIDON signal), successive intersample signals representative of the evolution of the video signal from one sampling period to the following; a recognizing device (5–7, 11, 12) for recognizing, in dependence upon pre-established criteria, the configurations of n successive intersample signals which are representative of a DIDON signal and supplying, on the one band, configurations likelihood signals and, on the other hand, configuration signals corresponding to low-high transitions, «+», high-low, «−», or to high or low stable states of the DIDON signal; and a data restoration circuit (8) for receiving the configuration signals and restoring a data signal (D) and a clock signal (Fd) when the configurations are likely.

2. Demodulator according to claim 1, characterized in that the conversion device comprises: a digital converter (1) for supplying, at the frequency $N \times FB$, samples of the video signal; a subtraction unit (2, 3) for supplying, at the frequency $n \times FB$, subtractive signals representative of the difference between the samples supplied by the converter and these same samples delayed by

$$\frac{1}{n \times FB}$$

and an analyzing memory (4) for receiving the subtractive signals, this memory being programmed to supply, as an inter-sample signal, a difference signal 0 for a subtractive signal the absolute value of which is smaller than a given threshold (a) and a difference signal + or −, according to the sign of the subtractive signal, when the absolute value of the subtractive signal exceeds the given threshold.

3. DIDON demodulator according to claim 2, characterized in that the recognizing device comprises: a register (5) for receiving the difference signals and supplying, at the frequency n. FB, a window signal formed of the n last received difference signals; a memory circuit (6, 7) for receiving the window signals, the memory circuit comprising a control input, and studying means (6, 7) for generating, as a function of the predetermined criteria, the configuration signals (eb 2, 1) and, as configuration likelihood signals, a first signal (eb 3) of recognizing unlikely configurations and a second signal (eb 4) of recognizing the front edge transition of the synchronization signal and of recognizing the transition of same type (low-high or high-low) as the transition of the front edge; an electronic interrupter (12) controlled by the first signal for supplying, on an output connected to the control input of the memory circuit, a signal of the frequency FB or a signal of the frequency $n \times FB$, depending on whether the first signal corresponds to a likely or to an unlikely configuration.

4. DIDON demodulator according to claim 3, characterized in that the data restoration circuit (8) comprises a signal input for receiving the configuration signals (eb 2, 1), an input for taking into account the received configuration signals, for receiving from the electronic interrupter (12) the signal of the frequency $n \times FB$ or no signal at all, depending on whether the first signal corresponds to a likely or an unlikely configuration, a first output for supplying, when the configuration is likely, a restored data signal (D) of duration 1/ FD, taking the successive logic values 01, 10, 00 and 11, during durations

$$\frac{1}{2\,FD}$$

respectively, when the configuration is a transition «+», «−», a low stable state or a high stable state, and a second output for supplying a restored clock signal (Fd) in synchronism with the middle of the restored data signal.

5. DIDON demodulator according to claim 3, characterized in that it comprises a synchronization extraction circuit (9) for recognizing from the configuration signals (eb 2, 1) and the second signal (eb 4) the front edge of the line synchronization signals of the television signal, and in that the synchronization extraction circuit comprises a counter (95, 98) for permitting, from the moment of recognizing the front edge of a line synchronization signal, the generation of a restored line synchronization signal (FL) and of a data validation window signal (R).

6. DIDON demodulator according to claims 4 and 5 taken together, characterized in that it comprises a validation circuit (13) for generating a data validation signal (VAL) and in that the validation circuit comprises to this effect means (130, 131) for recognizing the synchronization burst appearing at the beginning of a DIDON data signal, by recognizing a predetermined number of 0 and of 1 which alternate in the stored data signal (D) in the course of the data validation window signal (R).

Fig.1a

**Pe** → **CONVERTISSEUR ANALOGIQUE-NUMÉRIQUE** 1

6

**CIRCUIT SOUSTRACTEUR** 2

6

**CIRCUIT À RETARD** 3

6

a / 2

**MÉMOIRE D'ANALYSE** 4

7

2

Fe

**REGISTRE À DÉCALAGE** 5

8

2

**REGISTRE TAMPON** 6

10

7

**MÉMOIRE DE VRAISEMBLANCE**

eb3

eb2,1

eb4

2

**CIRCUIT D'EXTRACTION DE SYNCHRONISATION** 9

Fe

R

FL

**CIRCUIT DE VALIDATION** 13

VAL

11

**DIVISEUR DE FRÉQUENCE PAR 4**

Fe

CK

12

2

**CIRCUIT DE RECONSTITION DE DONNÉES** 8

Fe

D

Fd

Fe = 4.FB

**GÉNÉRATEUR DE FRÉQUENCE** 10

0159924

| AD | | | | | | | | | DO | |
|---|---|---|---|---|---|---|---|---|---|---|
| 0 | 0 | 0 | 0 | 0 | 0 | 0 | 0 | 0 | 0 | 0 |
| 0 | 0 | 0 | 0 | 0 | 0 | 0 | 0 | 1 | 0 | 0 |
| 0 | 0 | 0 | 0 | 0 | 0 | 0 | 1 | 0 | 0 | 0 |
| 0 | 0 | 0 | 0 | 0 | 0 | 0 | 1 | 1 | 0 | 0 |
| 0 | 0 | 0 | 0 | 0 | 0 | 1 | 0 | 0 | 0 | 0 |
| 0 | 0 | 0 | 0 | 0 | 0 | 1 | 0 | 1 | 0 | 1 |
| 0 | 0 | 0 | 0 | 0 | 0 | 1 | 1 | 0 | 0 | 1 |
| 0 | 0 | 0 | 0 | 0 | 0 | 1 | 1 | 1 | 0 | 1 |
| 0 | 0 | 0 | 0 | 0 | 1 | 0 | 0 | 0 | 0 | 1 |
| 0 | 0 | 0 | 0 | 0 | 0 | 0 | 0 | 1 | 0 | 1 |
| ⎰ | | ⎰ | | | ⎰ | | | | ⎰ | |
| 0 | 0 | 1 | 0 | 0 | 0 | 0 | 0 | 0 | 0 | 0 |
| 0 | 0 | 1 | 0 | 0 | 0 | 0 | 0 | 1 | 0 | 0 |
| 0 | 0 | 1 | 0 | 0 | 0 | 0 | 1 | 0 | 0 | 0 |
| 0 | 0 | 1 | 0 | 0 | 0 | 0 | 1 | 1 | 0 | 0 |
| 0 | 0 | 1 | 0 | 0 | 0 | 1 | 0 | 0 | 0 | 0 |
| 0 | 0 | 1 | 0 | 0 | 0 | 1 | 0 | 1 | 1 | 0 |
| 0 | 0 | 1 | 0 | 0 | 0 | 1 | 1 | 0 | 1 | 0 |
| 0 | 0 | 1 | 0 | 0 | 0 | 1 | 1 | 1 | 1 | 0 |
| 0 | 0 | 1 | 0 | 0 | 1 | 0 | 0 | 0 | 1 | 0 |
| 0 | 0 | 1 | 0 | 0 | 1 | 0 | 0 | 1 | 1 | 0 |
| ⎰ | ⎰ | | | ⎰ | | | | | ⎰ | |

## Fig.1b

10 01 01 01    00 01 00 01    00 01 01 00    00 01 01 01    01 00 01 00    01 00 01 01

01 01 00 01    01 01 01 10    01 01 01 00    01 01 01 01

**Fig.2a**

10 10 10 10    10 10 10 00    10 10 10 01    10 10 00 10    10 00 10 10    10 00 10 00

00 10 10 10    00 10 10 00    00 10 00 10    01 10 10 10

**Fig.2b**

10 00 00 00    10 00 00 01    10 00 01 10    10 00 01 00    10 01 10 00    10 01 10 01

10 01 00 10    10 01 00 00    00 10 00 00    00 10 00 01    00 10 01 10    00 10 01 00

00 00 10 00    00 00 10 01    00 00 00 10    00 00 00 00    00 00 00 01    00 00 01 10

00 00 01 00    00 01 10 00    00 01 10 01    00 01 00 10    00 01 00 00    01 10 00 00

01 10 00 01    01 10 01 10    01 10 01 00    01 00 10 00    01 00 10 01    01 00 00 10

01 00 00 00

**Fig.2c**

**Fig.3a**

eb2,1

CK → REGISTRE  80

MÉMOIRE  81

Fd′   D′

Fe → REGISTRE  82

Fd   D

**Fig.3b**

| eb2,1 | AD | | DO | | Fd′ | D′ |
|---|---|---|---|---|---|---|
| 01 | 00 | 01 | 1 | 0 | | |
| — | 01 | 10 | 1 | 0 | | |
| — | 10 | 11 | 0 | 1 | | |
| — | 11 | 00 | 0 | 1 | | |
| 10 | 00 | 01 | 1 | 1 | | |
| — | 01 | 10 | 1 | 1 | | |
| — | 10 | 11 | 0 | 0 | | |
| — | 11 | 00 | 0 | 0 | | |
| 00 | 00 | 01 | 1 | 0 | | |
| — | 01 | 10 | 1 | 0 | | |
| — | 10 | 11 | 0 | 0 | | |
| — | 11 | 00 | 0 | 0 | | |
| 11 | 00 | 01 | 1 | 1 | | |
| — | 01 | 10 | 1 | 1 | | |
| — | 10 | 11 | 0 | 1 | | |
| — | 11 | 00 | 0 | 1 | | |

Fig.4

Fig.5

Fig.6